# EUROPÄISCHE PATENTSCHRIFT

(11) **EP 3 245 732 B1**
(45) Veröffentlichungstag und Bekanntmachung des Hinweises auf die Patenterteilung: **29.09.2021**
(21) Anmeldenummer: 15804388.5
(22) Anmeldetag: 01.12.2015
(51) Int. Cl.: E05F 15/72, H02P 29/024, H02P 3/12, H02P 3/14

(54) **ELEKTROMECHANISCHER ANTRIEB ZUM BETÄTIGEN EINES BEWEGLICHEN FLÜGELS UND KORRESPONDIERENDE TÜR**
ELECTROMECHANICAL DRIVE FOR ACTUATING A MOVEABLE WING AND CORRESPONDING DOOR
ENTRAÎNEMENT ÉLECTROMÉCANIQUE POUR L'ACTIONNEMENT D'UN BATTANT MOBILE ET PORTE CORRESPONDANTE

(30) Priorität: 13.01.2015 DE 102015200289
(43) Veröffentlichungstag der Anmeldung: 22.11.2017
(73) Patentinhaber: GEZE GmbH, 71229 Leonberg (DE)
(72) Erfinder: HUCKER, Matthias, 76359 Marxzell (DE); HAHN, Erhard, 71379 Leutenbach (DE); KATZ, Eugen, 71139 Ehningen (DE); HÄGELE, Volker, 73614 Schorndorf (DE); FISCHER, Manuel, 71106 Magstadt (DE)
(86) Internationale Anmeldenummer: PCT/EP2015/078168
(87) Internationale Veröffentlichungsnummer: WO 2016/113031

(56) Entgegenhaltungen:
- EP-A1- 3 104 518
- WO-A1-2011/013585
- DE-A1-102005 028 007
- DE-B3-102005 049 488
- US-A1- 2006 125 436
- US-A1- 2013 300 321

## Beschreibung

Die Erfindung betrifft einen elektromechanischen Antrieb zum Betätigen eines beweglichen Flügels der im Oberbegriff des Patentanspruchs 1 angegebenen Art.

Aus dem Stand der Technik sind elektromechanische Türantriebe bekannt, welche auch als Feststellvorrichtungen in Feststellanlagen an Brandschutztüren eingesetzt werden. Entsprechende oder zumindest gattungsähnliche Antriebe sind beispielsweise aus der DE 10 2005 028007 A1, der US 2006/125436 A1, der US 2013/300321 A1, der WO 2011/013585 A1 sowie der DE 10 2005 049488 B3 bekannt. Bei Ausfall der Energieversorgung oder im Alarmfall muss die offene Tür einer Feststellanlage mit mechanisch gespeicherter Energie schließen, welche zuvor beim Öffnen der Tür auf- gebracht wurde. Es gibt verschiedene Anforderungen an das Verhalten einer solchen Tür. Wird die Tür im stromlosen Zustand des Antriebs manuell geöffnet, so muss der Passant die Energie aufbringen, welche zum nachfolgenden Schließen der Tür eingesetzt wird. Das bedeutet, dass der mechanische Energiespeicher beim manuellen Öffnen der Tür mit potentieller Energie aufgeladen wird, welche den losgelassenen Flügel wieder schließt. Der mechanische Energiespeicher ist beispielsweise als Feder ausgeführt, welche durch das manuelle Öffnen der Tür gespannt wird. Danach schließt die potentielle Energie in der Feder die Tür, wenn der Passant den Flügel loslässt. Das Schließmoment des Flügels ist dabei durch die aktuelle Federspannung und die verschiedenen Übersetzungen im System bestimmt. Damit der Flügel nicht ungebremst in die Schließlage schlägt, wird eine Bremsvorrichtung eingesetzt, welche die Schließbewegung des Flügels dämpft. Diese Bremsvorrichtung darf den Flügel aber nur in Schließrichtung bremsen, das Öffnen der Tür darf durch diese Bremsvorrichtung nicht noch zusätzlich behindert werden, da der Passant beim Öffnen der Tür ja schon die Energie aufbringen muss, um den mechanischen Energiespeicher zu laden.

Öffnet der Antrieb die Tür, so beschleunigt beispielsweise ein Elektromotor mittels elektrischer Energie den Flügel. Fällt beim Öffnen der Tür die elektrische Energieversorgung aus oder tritt ein Alarm auf, so besteht, insbesondere bei einer großen Flügelgeschwindigkeit oder bei so genannten "Free-Swing" ― Türen, bei welchen die Feder gespannt gehalten und bei Netzausfall und bei Alarm gelöst wird, die Gefahr, dass der Flügel ungebremst in die Offenlage schlägt oder eine Person hinter dem Flügel verletzt. Das bedeutet, dass die Bremsvorrichtung die Öffnungsbewegung des Flügels unverzüglich stoppen und die anschließende Schließbewegung des Flügels dämpfen muss. Die Bremsvorrichtung soll aber nur dann die Flügelbewegung beim Öffnen unverzüglich stoppen, falls der Netzausfall bzw. der Alarm beim automatischen Öffnen der Tür eintritt. Wird die Tür hingegen manuell geöffnet, so soll das manuelle Öffnen der Tür nicht durch die Bremsvorrichtung behindert werden.

Zudem ist es aus dem Stand der Technik bekannt, den Elektromotor des Antriebs selbst zum Bremsen des Flügels zu verwenden. Dies wird üblicherweise so gelöst, dass die Motorwicklung im stromlosen Zustand über ein als Diode ausgeführtes Schaltelement kurzgeschlossen ist. Dreht sich der als permanent magnetisch erregter Gleichstrommotor ausgeführte Elektromotor, so wird eine Spannung induziert. Der über den Kurzschluss fließende Strom hat ein Bremsmoment zur Folge. Dieses Bremsmoment wirkt wegen der Diode im Kurzschluss nur einseitig, mit weiteren Dioden in Serie kann die Schließgeschwindigkeit erhöht werden.

Bei einer anderen bekannten technischen Lösung triggert ein Oszillator so lange einen Triac, wie die Spannungsversorgung vorhanden ist. Nach Netzausfall oder Alarm wird der Triac nicht mehr getriggert. Der Triac bleibt so lange leitend, wie er getriggert wird. Danach bleibt er weiter leitend, falls durch ihn ein Strom fließt. Sobald kein Strom mehr fließt, sperrt der Triac und wird erst wieder leitend, falls er erneut durch die wieder vorhandene Versorgungsspannung getriggert wird. Wird dieser Triac in den Motorkurzschluss eingebracht, wird nur dann gebremst, falls der Netzausfall bzw. Alarm während des automatischen Öffnens auftritt. Ein späteres manuelles Öffnen der Tür wird nicht mehr behindert.

Diese bekannten technischen Lösungen weisen den Nachteil auf, dass die Diode bzw. der Triac passend zur Drehrichtung der Tür eingebaut werden müssen. Dazu werden üblicherweise Jumper eingesetzt, die vor Inbetriebnahme der Tür richtig von Hand gesetzt werden müssen. Die Bremsstärke beim Schließen der Tür muss in Abhängigkeit von der Größe des mechanischen Energiespeichers ebenfalls manuell eingestellt werden, indem beispielsweise Jumper gesetzt werden, um die gewünschte Schließzeit zu erhalten. Zudem fließt der Motorstrom über einen Endschlagschalter, so dass die Tür bei Leitungsbruch ungebremst zuschlägt.

Aus der DE 10 2005 028 007 B4 ist ein Antrieb zum Betätigen eines beweglichen Türflügels mit einer gattungsgemäßen Bremsvorrichtung bekannt. Die Bremsvorrichtung, durch welche die Bewegung des Türflügels gebremst werden kann, umfasst einen als Generator betriebenen Elektromotor, dessen Motorwelle durch eine Bewegung des Türflügels drehbar ist und an dessen Motorklemmen eine bewegungsabhängige Motorspannung entsteht, welche an einen Bremsstromkreis angelegt ist, wobei der Bremsstromkreis zumindest ein als Feldeffekttransistor (FET) ausgeführtes Schaltelement aufweist, über welches die Motorklemmen kurzschließbar sind. Im Bremsstromkreis ist eine Drain-Source-Strecke des Feldeffekttransistors angeordnet und eine Spannung zwischen Gate und Source des Feldeffekttransistors wird über ein Potentiometer eingestellt, welches in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Somit wird der Feldeffekttransistor als spannungsabhängiger Lastwiderstand für den Elektromotor betrieben, so dass die Bremskraft der Bremsvorrichtung von der Ausgangsspannung des als Generator betriebenen Elektromotors abhängig ist.

Der Erfindung liegt die Aufgabe zugrunde, einen verbesserten elektromechanischen Antrieb zum Betätigen eines beweglichen Flügels und eine korrespondierende Tür anzugeben, welche ein verbessertes Bremsen des beweglichen Flügels bei Netzausfall bzw. Alarm ermöglichen.

Diese Aufgabe wird durch die Merkmale des elektromechanischen Antriebs zum Betätigen eines beweglichen Flügels nach Patentanspruch 1 gelöst.

Vorteilhafte Ausgestaltungen und Weiterbildungen der Erfindung sind in den übrigen Ansprüchen angegeben.

Der erfindungsgemäße elektromechanische Antrieb zum Betätigen eines beweglichen Flügels umfasst einen Elektromotor, dessen Motorwelle im montierten Zustand des Antriebs über eine Kraftübertragungseinrichtung mit dem Flügel in Wirkverbindung steht, so dass eine Bewegung der Motorwelle eine Bewegung des Flügels bewirkt, einen mechanischen Energiespeicher, welcher durch eine Öffnungsbewegung des Flügels aufgeladen und durch eine Schließbewegung des beweglichen Flügels entladen wird, und eine Bremsvorrichtung, durch welche die Bewegung des Flügels bremsbar ist, indem der Elektromotor als Generator betreibbar ist. Hierbei entsteht durch die Bewegung des Flügels an Motorklemmen des als Generator betriebenen Elektromotors eine bewegungsabhängige Ausgangsspannung, welche an einen Bremsstromkreis angelegt ist, wobei der Bremsstromkreis zumindest ein Schaltelement aufweist, über welches die Motorklemmen kurzschließbar sind. Erfindungsgemäß ist in einem Notfallbetrieb die Ausgangsspannung des als Generator betriebenen Elektromotors an einen Ladestromkreis angelegt, welcher elektrische Energie in einem Kondensator zur Energieversorgung einer Notfallsteuerelektronik speichert.

Zudem wird eine Tür mit mindestens einem beweglichen Flügel und einem erfindungsgemäßen elektromechanischen Antrieb zum Betätigen des beweglichen Flügels vorgeschlagen.

Ausführungsformen des erfindungsgemäßen elektromechanischen Antriebs ermöglichen in einem Notfallbetrieb bei Netzausfall und im Alarmfall, wie beispielsweise einem Brandalarm, in vorteilhafter Weise eine automatische Dämpfung der Bewegung des beweglichen Flügels ohne externe Energiequelle. Die Parameter und/oder Grenzwerte zur Dämpfung der Bewegung des Flügels können während des Normalbetriebs automatisch von einer übergeordneten Steuerung vorgegeben und eingestellt werden. Zudem fließt bei Ausführungsformen der Erfindung der Motorstrom nicht über Endschlagschalter, so dass die Bremsvorrichtung auch bei einem Leitungsbruch zum Endschlagschalter funktioniert.

In vorteilhafter Ausgestaltung des erfindungsgemäßen Antriebs kann ein Motorrelais den Notfallbetrieb bei Netzausfall und/oder bei einem Alarm über mindestens einen Relaiskontakt aktivieren. Der mindestens eine Relaiskontakt kann im Normalbetrieb die Motorklemmen mit einer Hauptsteuerelektronik und im Notfallbetrieb mit der Notfallsteuerelektronik verbinden, welche den Ladestromkreis umfassen können. Dies ermöglicht in vorteilhafter Weise eine einfache und sichere Aktivierung des Notfallbetriebs und somit eine sichere Energieversorgung der Notfallsteuerelektronik.

In der Ausgestaltung des erfindungsgemäßen Antriebs stellt eine erste Auswerte- und Steuereinheit der Notfallsteuerelektronik im Notfallbetrieb über das als Feldeffekttransistor ausgeführte Schaltelement eine wirksame Bremskraft zur Dämpfung der Bewegung des Flügels ein. Dabei führt die erste Auswerte- und Steuereinheit über den Feldeffekttransistor eine Pulsweitenmodulation des Motorstroms durch. Zudem kann eine zweite Auswerte- und Steuereinheit der Hauptsteuerelektronik im Normalbetrieb über entsprechende Kommunikationsverbindungen mit der ersten Auswerte- und Steuereinheit der Notfallsteuerelektronik kommunizieren und Informationen über den aktuellen Betriebszustand des elektromechanischen Antriebs an die erste Auswerte- und Steuereinheit ausgeben. Die erste Auswerte- und Steuereinheit und die zweite Auswerte- und Steuereinheit sind vorzugsweise Mikrocontroller ausgeführt.

Die Pulsweitenmodulation des Motorstroms ermöglicht in vorteilhafter Weise die Vorgabe einer Schließzeit, welche beispielsweise durch Regelung der Schließgeschwindigkeit als Funktion des Öffnungswinkels des Flügels konstant gehalten werden kann. Die gewünschte Schließzeit kann in vorteilhafter Weise unabhängig von Temperatur, Alterung und Reibung vorgegeben und eingestellt werden. Zudem ermöglichen Ausführungsformen des erfindungsgemäßen elektromechanischen Antriebs die Implementierung von weiteren parametrierbaren und elektronisch einstellbaren Funktionen, wie beispielsweise einer Endschlagfunktion, welche variierende Einsatzpunkte für den Endschlag und die Endgeschwindigkeit des Flügels in Abhängigkeit von bestimmten Parametern vorgeben kann. Des Weiteren kann eine Öffnungsdämpfungsfunktion implementiert werden, welche die Öffnungsgeschwindigkeit des Flügels bei Vorliegen von bestimmten Betriebszuständen des Antriebs und/oder ab einem bestimmten Öffnungswinkel dämpft. Des Weiteren können Zusatzfunktionen wie Zyklenzähler und Speicherung von Wartungsdaten einfach implementiert werden. Zudem weist der erfindungsgemäße elektromechanische Antrieb keine leicht brennbaren Stoffe, wie beispielsweise Dämpferöl, auf.

Bei einer bevorzugten Ausführungsform des erfindungsgemäßen elektromechanischen Antriebs kann die erste Auswerte- und Steuereinheit die Dämpfung der Bewegung des Flügels in Abhängigkeit vom aktuellen Betriebszustand des elektromechanischen Antriebs und/oder von einer aktuellen Bewegungsrichtung und/oder einer aktuellen Geschwindigkeit und/oder eines aktuellen Öffnungswinkels des Flügels einstellen. Die erste Auswerteund Steuereinheit kann beispielsweise über mindestens einen Messkreis aus der Motorspannung eine aktuelle Bewegungsrichtung und Geschwindigkeit des Flügels bestimmen. Hierbei kann die Polarität der Motorspannung eine Information über die Bewegungsrichtung des Flügels zur Verfügung stellen und die Höhe der Motorspannung kann eine Information zur Ermittlung der Geschwindigkeit des Flügels zur Verfügung stellen. Zumindest ein erster Messkreis kann eine Öffnungsbewegung des Flügels erkennen und eine Messgröße zur Ermittlung der Öffnungsgeschwindigkeit des Flügels an die erste Auswerte- und Steuereinheit ausgeben. Zumindest ein zweiter Messkreis kann eine Schließbewegung des Flügels erkennen und eine Messgröße zur Ermittlung der Schließgeschwindigkeit des Flügels an die erste Auswerte- und Steuereinheit ausgeben. Zumindest ein dritter Messkreis kann einen Positionssensor umfassen, welcher eine Messgröße zur Ermittlung eines aktuellen Öffnungswinkels und/oder einer aktuellen Geschwindigkeit des Flügels an die erste Auswerte- und Steuereinheit ausgeben kann.

In weiterer vorteilhafter Ausgestaltung des erfindungsgemäßen Antriebs kann die erste Auswerte- und Steuereinheit eine automatische Öffnungsbewegung des Flügels für eine vorgegebene erste Zeitdauer mit einer maximalen Bremskraft dämpfen, und nach Ablauf der vorgegebenen ersten Zeitdauer die weitere Öffnungsbewegung des Flügels auf eine maximale Öffnungsgeschwindigkeit begrenzen, wenn während der automatischen Öffnungsbewegung des Flügels der Notfallbetrieb eintritt. Zudem kann die erste Auswerteund Steuereinheit eine manuelle Öffnungsbewegung des Flügels auf eine maximale Öffnungsgeschwindigkeit begrenzen, wenn während der manuellen Öffnungsbewegung der Notfallbetrieb eintritt. Dadurch kann in vorteilhafter Weise die Gefahr reduziert werden, dass der Flügel ungebremst in die Offenlage schlägt oder eine Person hinter dem Flügel verletzt.

In weiterer vorteilhafter Ausgestaltung des erfindungsgemäßen Antriebs kann die erste Auswerte- und Steuereinheit die Schließbewegung des Flügels auf eine maximale Schließgeschwindigkeit begrenzen, wenn während der Schließbewegung der Notfallbetrieb eintritt. Des Weiteren kann die Auswerte- und Steuereinheit die Dämpfung der Schließbewegung des Flügels beenden, wenn der Flügel mindestens eine vorgegebene Endschlagbedingung erreicht hat. Als Endschlagbedingung kann beispielsweise eine Endschlaggeschwindigkeit und/oder eine Endschlagposition vorgegeben werden. Dadurch kann in vorteilhafter Weise sichergestellt, werden, dass der bewegliche Flügel in die Endschlagposition gelangt und die Tür vollständig geschlossen ist.

In weiterer vorteilhafter Ausgestaltung des erfindungsgemäßen Antriebs kann die zweite Auswerte- und Steuereinheit Parameter und/oder Grenzwerte zur Dämpfung der Bewegung des Flügels an die erste Auswerte- und Steuereinheit ausgeben. Die erste Auswerteund Steuereinheit kann die Parameter und/oder Grenzwerte zur Dämpfung der Bewegung des Flügels in einem nichtflüchtigen Speicher speichern.

In weiterer vorteilhafter Ausgestaltung des erfindungsgemäßen Antriebs kann die Auswerte- und Steuereinheit mit jedem Öffnungszyklus des Flügels einen Zähler im nichtflüchtigen Speicher inkrementieren und somit die Öffnungszyklen des Flügels zählen. Zudem können Wartungsdaten im nichtflüchtigen Speicher gespeichert werden.

Nachfolgend werden Ausführungsbeispiele der Erfindung anhand von zeichnerischen Darstellungen näher erläutert.

Dabei zeigen:
- Fig. 1: ein schematisches Blockdiagramm eines Ausführungsbeispiels einer erfindungsgemäßen Tür mit einem Ausführungsbeispiel eines erfindungsgemäßen elektromechanischen Antriebs zum Betätigen eines beweglichen Flügels,
- Fig. 2: ein schematisches Blockdiagramm einer Auswerte- und Steuerelektronik für den erfindungsgemäßen elektromechanischen Antrieb zum Betätigen eines beweglichen Flügels aus Fig. 1, und
- Fig. 3: ein schematisches Blockdiagramm einer Notfallsteuerelektronik für die Auswerte- und Steuerelektronik aus Fig. 2.

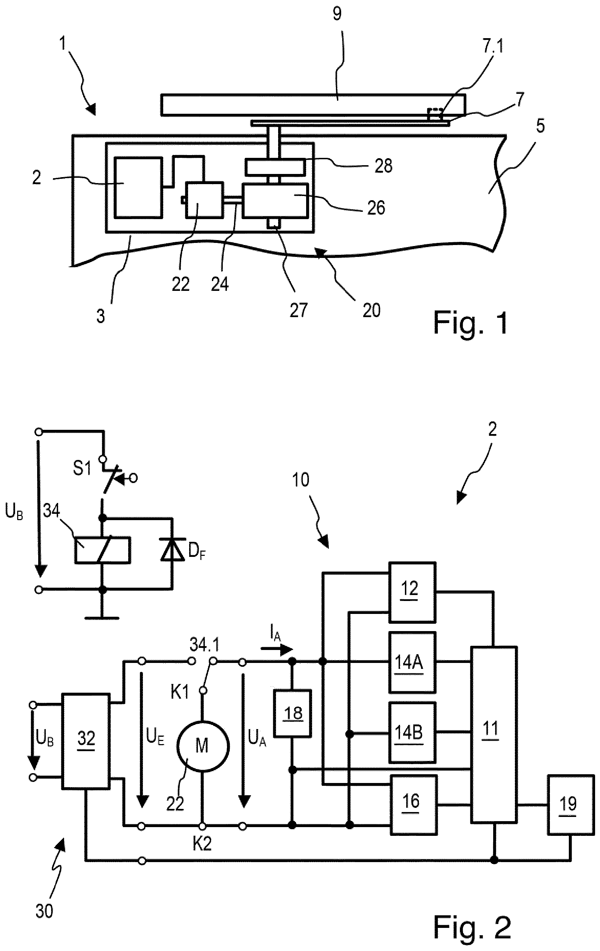

Wie aus Fig. 1 bis 3 ersichtlich ist, weist ein elektromechanischen Antrieb 1 zum Betätigen eines beweglichen Flügels 5 im dargestellten Ausführungsbeispiel ein Gehäuse 3 auf, in welchem eine Auswerte- und Steuerelektronik 2, ein Elektromotor 22, dessen Motorwelle 24 über eine Kraftübertragungseinrichtung mit dem Flügel 5 in Wirkverbindung steht, so dass eine Bewegung der Motorwelle 24 eine Bewegung des Flügels 5 bewirkt, ein mechanischer Energiespeicher 28, welcher durch eine Öffnungsbewegung des Flügels 5 aufgeladen und durch eine Schließbewegung des beweglichen Flügels 5 entladen wird, und eine Bremsvorrichtung 20 angeordnet sind, durch welche die Bewegung des Flügels 5 gebremst werden kann, indem der Elektromotor 22 als Generator betrieben wird. Hierbei entsteht durch die Bewegung des Flügels 5 an Motorklemmen K1, K2 des als Generator betriebenen Elektromotors 22 eine bewegungsabhängige Ausgangsspannung U_{A}, welche an einen Bremsstromkreis 18 angelegt ist. Der Bremsstromkreis 18 weist zumindest ein als Feldeffekttransistor FET ausgeführtes Schaltelement auf, über welches die Motorklemmen K1, K2 kurzgeschlossen werden können. Der mechanische Energiespeicher 28 ist vorzugsweise als Feder ausgeführt und wird durch manuelles Öffnen des Flügels 5 mit potentieller Energie aufgeladen, welche den losgelassenen Flügel 5 wieder schließt. Erfindungsgemäß ist in einem Notfallbetrieb die Ausgangsspannung U_{A} des als Generator betriebenen Elektromotors 22 an einen Ladestromkreis 12 angelegt, welcher elektrische Energie in einem Kondensator C zur Energieversorgung einer Notfallsteuerelektronik 10 speichert.

Wie aus Fig. 1 weiter ersichtlich ist, ist bei dem dargestellten Ausführungsbeispiel das Gehäuse 3 flügelfest am oberen linken Randbereich des beweglichen Flügels 5 montiert. Die Motorwelle 24 des Elektromotors 22 ist über ein Getriebe 26 mit einer Abtriebswelle 27 gekoppelt, welche mit einem Gleitarm 7 gekoppelt ist. Der Gleitarm 7 weist an seinem freien Ende einen Gleitstein 7.1 auf. welcher in einer blendenfest montierten Gleitschiene 9 geführt ist. Der Elektromotor 22 ist vorzugsweise als permanent magnetischer erregter Gleichstrommotor ausgeführt.

Wie aus Fig. 2 weiter ersichtlich ist, umfasst die Auswerte- und Steuerelektronik 2 neben der Notfallsteuerelektronik 10 mit einer ersten Auswerte- und Steuereinheit 11 eine Hauptsteuerelektronik 30 mit einer zweiten Auswerte- und Steuereinheit 32 und ein Motorrelais 34, welches über ein als Öffner ausgeführtes weiteres Schaltelement S1 mit einer Betriebsspannung U_{B} verbunden ist. Eine Freilaufdiode D_{F} ist elektrisch parallel zum Motorrelais 34 geschaltet. Das Motorrelais 34 aktiviert den Notfallbetrieb bei Netzausfall und/oder bei einem Alarm, wie beispielsweise einem Brandalarm, über mindestens einen Relaiskontakt 34.1. Im dargestellten Ausführungsbeispiel verbindet ein Relaiskontakt 34.1 im Normalbetrieb eine erste Motorklemme K1 mit der Hauptsteuerelektronik 30 und im Notfallbetrieb mit der Notfallsteuerelektronik 10, welche den Ladestromkreis 12 umfasst. Eine zweite Motorklemme K2 ist im dargestellten Ausführungsbeispiel sowohl mit der Notfallsteuerelektronik 10 als auch mit der Hauptsteuerelektronik 30 verbunden. Alternativ kann ein nicht dargestellter zweiter Relaiskontakt des Motorrelais 34 die zweite Motorklemme K2 im Normalbetrieb mit der Hauptsteuerelektronik 30 und im Notfallbetrieb mit der Notfallsteuerelektronik 10 verbinden. Im dargestellten Ausführungsbeispiel sind die beiden Auswerteund Steuereinheiten 11, 32 jeweils als Mikrocontroller ausgeführt.

Im Normalbetrieb ist das Motorrelais 34 durch die anliegende Betriebsspannung U_{B} bestromt, so dass der Relaiskontakt 34.1 die erste Motorklemme K1 mit der Hauptsteuerelektronik 30 verbindet. Der elektromechanische Antrieb 1 bewegt den Flügel 5 und öffnet die korrespondierende Tür, indem die zweite Auswerte- und Steuereinheit 32 den Elektromotor 22 durch Anlegen einer Eingangsspannung U_{E} an die Motorklemmen K1, K2 beschleunigt. Somit wird der Flügel 5 mittels elektrischer Energie bewegt. Wird der Flügel 5 zum Öffnen der Tür manuell bewegt, so muss der Passant die Energie aufbringen, die als potentielle Energie im mechanischen Energiespeicher 28 gespeichert wird. Lässt der Passant den Flügel 5 los, dann schließt die gespeicherte Energie die Tür. Damit der Flügel 5 nicht ungebremst in die Schließlage schlägt, kann die Hauptsteuerelektronik 30 die Bremsvorrichtuna 20 einsetzen. um die Schließbeweauna des Flüaels 5 zu dämofen. Das

Schaltelement S1 kann beispielsweise als von der zweiten Auswerte- und Steuereinheit 32 angesteuerter elektronischer Schalter, wie beispielsweise als Feldeffekttransistor ausgeführt werden. Dadurch kann die Hauptsteuerelektronik 30 die Bauelemente der Notfallsteuerelektronik 10 auch während des Normalbetriebs zum Dämpfen der Bewegung des beweglichen Flügels 5 einsetzen. So kann die zweite Auswerte- und Steuereinheit 32 das Motorrelais 34 durch Öffnen des Schaltelements S1 von der Betriebsspannung trennen. Dadurch wechselt der Relaiskontakt 34.1 in den dargestellten stromlosen Schaltzustand und verbindet die Motorklemmen K1, K2 mit der Notfallelektronik 10, so dass die erste Auswerte- und Steuereinheit 11 die Bewegung des beweglichen Flügels 5 über den Bremsstromkreis 18 dämpfen kann.

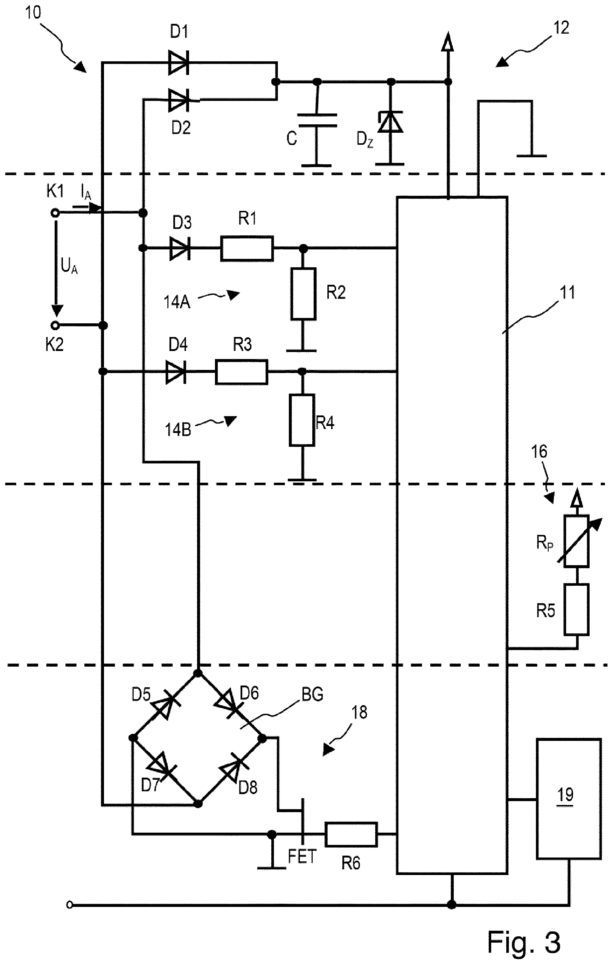

Wie aus Fig. 2 und 3 weiter ersichtlich ist, umfasst die Notfallsteuerelektronik 10 den Ladestromkreis 12, an welchen die Ausgangsspannung U_{A} angelegt ist und welcher elektrische Energie im Kondensator C zur Energieversorgung der Notfallsteuerelektronik 10 speichert. In Abhängigkeit von der Polarität der Ausgangsspannung U_{A} wird diese über eine erste Diode D1 oder über eine zweite Diode D2 an den Speicherkondensator C angelegt. Eine Zenerdiode D_{z} begrenzt die maximale Spannung. Zudem umfasst die Notfallsteuerelektronik 10 im dargestellten Ausführungsbeispiel einen ersten Messkreis 14A mit einer dritten Diode D3 und einem Spannungsteiler, welcher einen ersten ohmschen Widerstand R1 und einen zweiten ohmschen Widerstand R2 aufweist. Der erste Messkreis 14A erkennt aufgrund der Polung der dritten Diode D3 eine Öffnungsbewegung des Flügels 5 und gibt am Abgriff zwischen dem ersten und zweiten ohmschen Widerstand R1, R2 eine Messgröße zur Ermittlung der Öffnungsgeschwindigkeit des Flügels 5 an die erste Auswerte- und Steuereinheit 11 aus. Des Weiteren umfasst die Notfallsteuerelektronik 10 im dargestellten Ausführungsbeispiel einen zweiten Messkreis 14B mit einer vierten Diode D4 und einem weiteren Spannungsteiler, welcher einen dritten ohmschen Widerstand R3 und einen vierten ohmschen Widerstand R4 aufweist. Der zweite Messkreis 14B erkennt aufgrund der Polung der vierten Diode D4 eine Schließbewegung des Flügels 5 und gibt am Abgriff zwischen dem dritten und vierten ohmschen Widerstand R3, R4 eine Messgröße zur Ermittlung der Schließgeschwindigkeit des Flügels 5 an die erste Auswerte- und Steuereinheit 11 aus. Ein dritter Messkreis 16 der Notfallsteuerelektronik 10 umfasst einen Positionssensor R_{P}, welcher eine Messgröße zur Ermittlung eines aktuellen Öffnungswinkels und/oder einer aktuellen Geschwindigkeit des Flügels 5 an die erste Auswerte- und Steuereinheit 11 ausgibt. Der Positionssensor Rₚ kann beispielsweise als Folienpotentiometer ausgeführt werden, zu welchem ein Schutzwiderstand R5 zur Strombegrenzung in Reihe geschaltet werden kann. Somit kann die erste Auswerte- und Steuereinheit 11 über die Messkreise 14A, 14B aus der Ausgangsspannung U_{A} eine aktuelle Bewegungsrichtung und Geschwindigkeit des Flügels 5 bestimmen. Über den dritten Messkreis 16 kann die erste Auswerte- und Steuereinheit 11 den absoluten Öffnungswinkel oder die Geschwindigkeit des Flügels 5 bestimmen.

Wie aus Fig. 2 und 3 weiter ersichtlich ist, umfasst der Bremsstromkreis 18 den Feldeffekttransistor FET, einen Gatewiderstand R6, über welchen das Gate des Feldeffekttransistors FET mit der ersten Auswerte- und Steuereinheit 11 elektrisch verbunden ist, und eine Brückengleichrichterschaltung BG mit vier Dioden D5, D6, D7, D8, welche bewirkt, dass die Polarität der an der Drain-Source-Strecke des Feldeffekttransistors FET anliegenden Spannung unabhängig von der Polarität der Ausgangsspannung U_{A} des als Generator betriebenen Elektromotors 22 gleich bleibt. Über den Feldeffekttransistor FET steuert die erste Auswerte- und Steuereinheit 11 nun den Kurzschluss an den Motorklemmen K1, K2 nach folgendem Prinzip:
Mit der Aktivierung des Notfallbetriebs sind die Motorklemmen K1, K2 geöffnet und elektrische Energie wird in den Kondensator C der Ladeschaltung 12 geladen. Die im Kondensator C gespeicherte Energie wird zur Energieversorgung der Notfallsteuerelektronik 10 verwendet. Zudem bestimmt die erste Auswerte- und Steuereinheit 11 während die Motorklemmen K1, K2 offen sind über den ersten oder zweiten Messkreis 14A, 14B die Winkelgeschwindigkeit des Elektromotors 22, also die Geschwindigkeit des Flügels 5. Zusätzlich kann die Auswerte- und Steuereinheit 11 über den dritten Messkreis 16 die Position bzw. die Geschwindigkeit des Flügels 5 bestimmen.

Zur Dämpfung der Bewegung des Flügels 4 schließt die erste Auswerte- und Steuereinheit 11 die Motorklemmen K1. K2 über den Feldeffekttransistor FET kurz. Während des Kurzschlusses wird die Winkelgeschwindigkeit des Elektromotors 22 gedämpft. Durch die Pulsweitenmodulation des Kurzschlussstromes I_{A} stellt die erste Auswerte- und Steuereinheit 11 im Notfallbetrieb die Dämpfung der Geschwindigkeit und somit die Bremskraft ein und sorgt für das Nachladen ihrer Energieversorgung. Im Notfallbetrieb stellt die erste Auswerte- und Steuereinheit 11 die Dämpfung der Bewegung des Flügels 5 in Abhängigkeit vom aktuellen Betriebszustand des elektromechanischen Antriebs 1 und/oder von einer aktuellen Bewegungsrichtung und/oder einer aktuellen Geschwindigkeit und/oder eines aktuellen Öffnungswinkels des Flügels 5 ein. Des Weiteren sorgt die erste Auswerteund Steuereinheit 11 im Notfallbetrieb durch Regelung der Schließgeschwindigkeit als Funktion vom Öffnungswinkel des Flügels 5 für die gewünschte Schließzeit von beispielsweise 5 Sekunden. Die Schließzeit ist somit unabhängig von Temperatur, Alterung und Reibung. Das bedeutet, dass die erste Auswerte- und Steuereinheit 11 die Dämpfung der Bewegung des Flügels 5 in Abhängigkeit von einem aktuellen Betriebszustand des elektrischen Antriebs 1 und/oder einer aktuellen Bewegungsrichtung und/oder einer aktuellen Geschwindigkeit und/oder eines aktuellen Öffnungswinkels des Flügels 5 einstellt.

Die erste Auswerte- und Steuereinheit 11 dämpft eine automatische Öffnungsbewegung des Flügels 5 für eine vorgegebene erste Zeitdauer von beispielsweise ca. 3 Sekunden mit einer maximalen Bremskraft, wenn während der automatischen Öffnungsbewegung des Flügels 5 der Notfallbetrieb eintritt. Nach Ablauf der vorgegebenen ersten Zeitdauer von ca. 3 Sekunden begrenzt die erste Auswerte- und Steuereinheit 1 die weitere Öffnungsbewegung des Flügels 5 auf eine maximale Öffnungsgeschwindigkeit. Wenn während der manuellen Öffnungsbewegung der Notfallbetrieb eintritt, begrenzt die erste Auswerte- und Steuereinheit 11 eine manuelle Öffnungsbewegung des Flügels 5 auf eine maximale Öffnungsgeschwindigkeit. Dadurch kann in vorteilhafter Weise die Gefahr reduziert werden, dass der Flügel 5 ungebremst in die Offenlage schlägt oder eine Person hinter dem Flügel verletzt.

Wenn während der Schließbewegung des Flügels 5 der Notfallbetrieb eintritt, begrenzt die erste Auswerte- und Steuereinheit 11 die Schließbeweauna des Flüaels 5 auf eine maximale Schließgeschwindigkeit. Die erste Auswerte- und Steuereinheit 11 beendet die Dämpfung der Schließbewegung des Flügels 5, wenn der Flügel 5 mindestens eine vorgegebene Endschlagbedingung erreicht hat. Als Endschlagbedingung kann beispielsweise eine Endschlaggeschwindigkeit und/oder eine Endschlagposition vorgegeben werden.

Die zweite Auswerte- und Steuereinheit 32 der Hauptsteuerelektronik 30 kommuniziert im Normalbetrieb über entsprechende Kommunikationsverbindungen mit der ersten Auswerte- und Steuereinheit 11 der Notfallsteuerelektronik 10 und gibt Informationen über den aktuellen Betriebszustand des elektromechanischen Antriebs 1 an die erste Auswerte- und Steuereinheit 11 aus. Zudem kann die zweite Auswerte- und Steuereinheit 32 Parameter und/oder Grenzwerte zur Dämpfung der Bewegung des Flügels 5 an die erste Auswerteund Steuereinheit 11 ausgeben. Im dargestellten Ausführungsbeispiel speichert die erste Auswerte- und Steuereinheit 11 die Parameter und/oder Grenzwerte zur Dämpfung der Bewegung des Flügels 5 in einem nichtflüchtigen Speicher 19. Zudem inkrementiert die erste Auswerte- und Steuereinheit 11 mit jedem Öffnungszyklus des Flügels 5 einen Zähler im nichtflüchtigen Speicher 19. Außerdem können bei Bedarf Wartungsdaten in den nichtflüchtigen Datenspeicher 19 geschrieben und aus diesem gelesen werden. Dies gilt auch für den Stand des Zyklenzählers im Datenspeicher 19.

Ausführungsformen des erfindungsgemäßen elektromechanischen Antriebs 1 können vorzugweise für Brandschutztüren eingesetzt werden.

**Bezugszeichenliste**

| | | | |
|---|---|---|---|
| 1 | elektromechanischer Antrieb | FET | Feldeffekttransistor |
| 2 | Auswerte- und Steuerelektronik | BG | Brückengleichrichter |
| 3 | Gehäuse | K1, K2 | Motorklemme |
| 5 | Flügel | U_{A} | Ausgangsspannung |
| 7 | Gleitarm | U_{E} | Eingangsspannung |
| 7.1 | Gleitstein | I_{A} | Motorstrom |
| 9 | Gleitschiene | D_{F} | Freilaufdiode |
| 10 | Notfallsteuerelektronik | S1 | Schaltelement |
| 11 | Auswerte- und Steuereinheit (Mikrocontroller) | | |
| 12 | Ladestromkreis (Energieversorgung) | | |
| 14A | erster Messkreis (Geschwindigkeitsmessung) | | |
| 14B | zweiter Messkreis (Geschwindigkeitsmessung) | | |
| 16 | dritter Messkreis (Positionsbestimmung) | | |
| 18 | Bremsstromkreis (Pulsweitenmodulation) | | |
| 19 | nichtflüchtiger Speicher | | |
| 20 | Bremsvorrichtung | | |
| 22 | Elektromotor | | |
| 24 | Motorwelle | | |
| 26 | Getriebe | | |
| 27 | Abtriebswelle | | |
| 28 | mechanischer Energiespeicher | | |
| 30 | Hauptsteuerelektronik | | |
| 32 | Auswerte- und Steuereinheit (Mikrocontroller) | | |
| 34 | Motorrelais | | |
| 34.1 | Relaiskontakt | | |
| D1 bis D8 | Diode | | |
| R1 bis R6 | ohmscher Widerstand | | |
| Rp | Potentiometer | | |
| C | elektrischer Energiespeicher | | |
| D_{z} | Zenerdiode | | |

## Patentansprüche

1. Elektromechanischer Antrieb (1) umfassend einen Elektromotor (22) zum Betätigen eines beweglichen Flügels (5) mit dem Elektromotor (22), dessen Motorwelle (24) im montierten Zustand des Antriebs (1) über eine Kraftübertragungseinrichtung mit dem Flügel (5) in Wirkverbindung steht, so dass eine Bewegung der Motorwelle (24) eine Bewegung des Flügels (5) bewirkt, einem mechanischen Energiespeicher, welcher durch eine Öffnungsbewegung des Flügels (5) aufgeladen und durch eine Schließbewegung des beweglichen Flügels (5) entladen wird, und einer Bremsvorrichtung (20), durch welche die Bewegung des Flügels (5) bremsbar ist, indem der Elektromotor (22) als Generator betreibbar ist, wobei durch die Bewegung des Flügels (5) an Motorklemmen (K1, K2) des als Generator betriebenen Elektromotors (22) eine bewegungsabhängige Ausgangsspannung (UA) entsteht, welche an einen Bremsstromkreis (18) angelegt ist, wobei der Bremsstromkreis (18) zumindest ein Schaltelement (FET) aufweist, über welches die Motorklemmen (K1, K2) kurzschließbar sind,
**dadurch gekennzeichnet,**
**dass** in einem Notfallbetrieb die Ausgangsspannung (UA) des als Generator betriebenen Elektromotors (22) an einen Ladestromkreis (12) angelegt ist, welcher elektrische Energie in einem Kondensator (C) zur Energieversorgung einer Notfallsteuerelektronik (10) speichert,
wobei ferner eine erste Auswerte- und Steuereinheit (11) der Notfallsteuerelektronik (10) über das als Feldeffekttransistor (FET) ausgeführte Schaltelement eine wirksame Bremskraft zur Dämpfung der Bewegung des Flügels (5) einstellt und
die erste Auswerte- und Steuereinheit (11) über den Feldeffekttransistor (FET) eine Pulsweitenmodulation des Motorstroms (I_{A}) durchführt.

2. Antrieb nach Anspruch 1,
**dadurch gekennzeichnet,**
**dass** ein Motorrelais (34) den Notfallbetrieb bei Netzausfall und/oder bei einem Alarm über mindestens einen Relaiskontakt (34.1) aktiviert.

3. Antrieb nach Anspruch 2,
**dadurch gekennzeichnet,**
**dass** der mindestens eine Relaiskontakt (34.1) im Normalbetrieb die Motorklemmen (K1, K2) mit einer Hauptsteuerelektronik (30) und im Notfallbetrieb mit der Notfallsteuerelektronik (10) verbindet, welche den Ladestromkreis (12) umfasst.

4. Antrieb nach einem der Ansprüche 1 bis 3,
**dadurch gekennzeichnet,**
**dass** eine zweite Auswerte- und Steuereinheit (32) der Hauptsteuerelektronik (30) im Normalbetrieb über entsprechende Kommunikationsverbindungen mit der ersten Auswerteund Steuereinheit (11) der Notfallsteuerelektronik (10) kommuniziert und Informationen über den aktuellen Betriebszustand des elektromechanischen Antriebs (1) an die erste Auswerte- und Steuereinheit (11) ausgibt.

5. Antrieb nach einem der Ansprüche 1 bis 4,
**dadurch gekennzeichnet,**
**dass** die erste Auswerte- und Steuereinheit (11) die Dämpfung der Bewegung des Flügels (5) in Abhängigkeit vom aktuellen Betriebszustand des elektromechanischen Antriebs (1) und/oder von einer aktuellen Bewegungsrichtung und/oder einer aktuellen Geschwindigkeit und/oder eines aktuellen Öffnungswinkels des Flügels (5) einstellt.

6. Antrieb nach Anspruch 5,
**dadurch gekennzeichnet.**
**dass** die erste Auswerte- und Steuereinheit (11) über mindestens einen Messkreis (14A, 14B) aus der Ausgangsspannung (UA) eine aktuelle Bewegungsrichtung und Geschwindigkeit des Flügels (5) bestimmt.

7. Antrieb nach Anspruch 6,
**dadurch gekennzeichnet,**
**dass** zumindest ein erster Messkreis (14A) eine Öffnungsbewegung des Flügels (5) erkennt und eine Messgröße zur Ermittlung der Öffnungsgeschwindigkeit des Flügels (5) an die erste Auswerte- und Steuereinheit (11) ausgibt.

8. Antrieb nach Anspruch 6 oder 7,
**dadurch gekennzeichnet,**
**dass** zumindest ein zweiter Messkreis (14B) eine Schließbewegung des Flügels (5) erkennt und eine Messgröße zur Ermittlung der Schließgeschwindigkeit des Flügels (5) an die erste Auswerte- und Steuereinheit (11) ausgibt.

9. Antrieb nach einem der Ansprüche 5 bis 8,
**dadurch gekennzeichnet,**
**dass** zumindest ein dritter Messkreis (16) einen Positionssensor (R_{P}) umfasst, welcher eine Messgröße zur Ermittlung eines aktuellen Öffnungswinkels und/oder einer aktuellen Geschwindigkeit des Flügels (5) an die erste Auswerte- und Steuereinheit (11) ausgibt.

10. Antrieb nach einem der Ansprüche 1 bis 9,
**dadurch gekennzeichnet,**
**dass** die erste Auswerte- und Steuereinheit (11) eine automatische Öffnungsbewegung des Flügels (5) für eine vorgegebene erste Zeitdauer mit einer maximalen Bremskraft dämpft, und nach Ablauf der vorgegebenen ersten Zeitdauer die weitere Öffnungsbewegung des Flügels (5) auf eine maximale Öffnungsgeschwindigkeit begrenzt, wenn während der automatischen Öffnungsbewegung des Flügels (5) der Notfallbetrieb eintritt.

11. Antrieb nach einem der Ansprüche 1 bis 10,
**dadurch gekennzeichnet,**
**dass** die erste Auswerte- und Steuereinheit (11) eine manuelle Öffnungsbewegung des Flügels (5) auf eine maximale Öffnungsgeschwindigkeit begrenzt, wenn während der manuellen Öffnungsbewegung der Notfallbetrieb eintritt.

12. Antrieb nach einem der Ansprüche 1 bis 11,
**dadurch gekennzeichnet,**
**dass** die erste Auswerte- und Steuereinheit (11) die Schließbewegung des Flügels (5) auf eine maximale Schließgeschwindigkeit begrenzt, wenn während der Schließbewegung der Notfallbetrieb eintritt.

13. Antrieb nach Anspruch 12,
**dadurch gekennzeichnet,**
**dass** die Auswerte- und Steuereinheit (11) die Dämpfung der Schließbewegung des Flügels (5) beendet, wenn der Flügel (5) mindestens eine vorgegebene Endschlagbedingung erreicht hat.

14. Antrieb nach Anspruch 13,
**dadurch gekennzeichnet,**
**dass** eine Endschlaggeschwindigkeit und/oder eine Endschlagposition als Endschlagbedingung vorgegeben sind.

15. Antrieb nach einem der Ansprüche 4 bis 14,
**dadurch gekennzeichnet,**
**dass** die zweite Auswerte- und Steuereinheit (32) Parameter und/oder Grenzwerte zur Dämpfung der Bewegung des Flügels (5) an die erste Auswerte- und Steuereinheit (11) ausgibt.

16. Antrieb nach Anspruch 15,
**dadurch gekennzeichnet,**
**dass** die erste Auswerte- und Steuereinheit (11) die Parameter und/oder Grenzwerte zur Dämpfung der Bewegung des Flügels (5) in einem nichtflüchtigen Speicher (19) speichert.

17. Antrieb nach Anspruch 15 oder 16,
**dadurch gekennzeichnet,**
**dass** die erste Auswerte- und Steuereinheit (11) mit jedem Öffnungszyklus des Flügels (5) einen Zähler im nichtflüchtigen Speicher (19) inkrementiert.

18. Tür mit mindestens einem beweglichen Flügel (5) und einem Elektromechanischen Antrieb (1) zum Betätigen des beweglichen Flügels (5),
**dadurch gekennzeichnet,**
**dass** der Elektromechanische Antrieb (1) nach mindestens einem der Ansprüche 1 bis 17 ausgeführt ist.

## Claims

1. Electromechanical drive (1) comprising an electric motor (22) for actuating a movable wing (5) with the electric motor (22), the motor shaft (24) of which is operatively connected to the wing (5) in the mounted state of the drive (1) via a force transmission apparatus, such that a movement of the motor shaft (24) brings about a movement of the wing (5), a mechanical energy storage unit that is charged through an opening movement of the wing (5) and is discharged through a closing movement of the movable wing (5), and a braking device (20) by way of which the movement of the wing (5) is able to be braked by virtue of the electric motor (22) being able to be operated as a generator, wherein the movement of the wing (5) gives rise, at motor terminals (K1, K2) of the electric motor (22) operated as a generator, to a motion-dependent output voltage (UA) that is applied to a brake circuit (18), wherein the brake circuit (18) has at least one switching element (FET) by way of which the motor terminals (K1, K2) are able to be short-circuited,
**characterized**
**in that**, in an emergency mode, the output voltage (UA) of the electric motor (22) operated as a generator is applied to a charging circuit (12) that stores electrical energy in a capacitor (C) for supplying energy to emergency control electronics (10),
wherein a first evaluation and control unit (11) of the emergency control electronics (10) also sets an effective braking force for damping the movement of the wing (5) via the switching element designed as a field-effect transistor (FET) and
the first evaluation and control unit (11) performs pulse-width modulation on the motor current (I_{A}) via the field-effect transistor (FET).

2. Drive according to Claim 1,
**characterized**
**in that** a motor relay (34) activates the emergency mode via at least one relay contact (34.1) in the event of a grid failure and/or in the event of an alarm.

3. Drive according to Claim 2,
**characterized**
**in that** the at least one relay contact (34.1) connects the motor terminals (K1, K2) to main control electronics (30) in normal mode and connects said motor terminals to the emergency electronics (10), comprising the charging circuit (12), in emergency mode.

4. Drive according to one of Claims 1 to 3,
**characterized**
**in that** a second evaluation and control unit (32) of the main control electronics (30), in normal mode, communicates with the first evaluation and control unit (11) of the emergency control electronics (10) via appropriate communication connections and outputs information about the current operating state of the electromechanical drive (1) to the first evaluation and control electronics (11).

5. Drive according to one of Claims 1 to 4,
**characterized**
**in that** the first evaluation and control unit (11) sets the damping of the movement of the wing (5) on the basis of the current operating state of the electromechanical drive (1) and/or of a current direction of movement and/or a current speed and/or a current opening angle of the wing (5).

6. Drive according to Claim 5,
**characterized**
**in that** the first evaluation and control unit (11) determines a current direction of movement and speed of the wing (5) from the output voltage (UA) via at least one measurement circuit (14A, 14B).

7. Drive according to Claim 6,
**characterized**
**in that** at least one first measurement circuit (14A) identifies an opening movement of the wing (5) and outputs a measured variable for determining the opening speed of the wing (5) to the first evaluation and control unit (11).

8. Drive according to Claim 6 or 7,
**characterized**
**in that** at least one second measurement circuit (14B) identifies a closing movement of the wing (5) and outputs a measured variable for determining the closing speed of the wing (5) to the first evaluation and control unit (11) .

9. Drive according to one of Claims 5 to 8,
**characterized**
**in that** at least one third measurement circuit (16) comprises a position sensor (R_{P}) that outputs a measured variable for determining a current opening angle and/or a current speed of the wing (5) to the first evaluation and control unit (11).

10. Drive according to one of Claims 1 to 9.
**characterized**
**in that** the first evaluation and control unit (11) damps an automatic opening movement of the wing (5) with a maximum braking force for a predefined first duration and, after the predefined first duration has elapsed, limits the further opening angle of the wing (5) to a maximum opening speed when the emergency mode occurs during the automatic opening movement of the wing (5).

11. Drive according to one of Claims 1 to 10,
**characterized**
**in that** the first evaluation and control unit (11) limits a manual opening movement of the wing (5) to a maximum opening speed when the emergency mode occurs during the manual opening movement.

12. Drive according to one of Claims 1 to 11,
**characterized**
**in that** the first evaluation and control unit (11) limits the closing movement of the wing (5) to a maximum closing speed when the emergency mode occurs during the closing movement.

13. Drive according to Claim 12,
**characterized**
**in that** the evaluation and control unit (11) ends the damping of the closing movement of the wing (5) when the wing (5) has achieved at least one predefined end stop condition.

14. Drive according to Claim 13,
**characterized**
**in that** an end stop speed and/or an end stop position are predefined as end stop condition.

15. Drive according to one of Claims 4 to 14,
**characterized**
**in that** the second evaluation and control unit (32) outputs parameters and/or limit values for damping the movement of the wing (5) to the first evaluation and control unit (11).

16. Drive according to Claim 15,
**characterized**
**in that** the first evaluation and control unit (11) stores the parameters and/or limit values for damping the movement of the wing (5) in a non-volatile memory (19).

17. Drive according to Claim 15 or 16,
**characterized**
**in that** the first evaluation and control unit (11) increments a counter in the non-volatile memory (19) with each opening cycle of the wing (5).

18. Door having at least one movable wing (5) and an electromechanical drive (1) for actuating the movable wing (5),
**characterized**
**in that** the electromechanical drive (1) is designed in accordance with at least one of Claims 1 to 17.

## Revendications

1. Entraînement électromécanique (1) comportant un moteur électrique (22) destiné à actionner un battant mobile (5) à l'aide du moteur électrique (22) dont l'arbre de moteur (24), dans l'état monté de l'entraînement (1), est en liaison fonctionnelle avec le battant (5) par le biais d'un élément de transmission de force, de sorte qu'un mouvement de l'arbre de moteur (24) provoque un mouvement du battant (5), un accumulateur d'énergie mécanique, lequel est chargé par un mouvement d'ouverture du battant (5) et est déchargé par un mouvement de fermeture du battant mobile (5), et un dispositif de freinage (20) au moyen duquel le mouvement du battant (5) peut être freiné, par le fait que le moteur électrique (22) peut fonctionner comme générateur, une tension de sortie (UA), dépendante du mouvement, étant produite aux bornes (K1, K2) du moteur électrique (22) fonctionnant comme générateur par le mouvement du battant (5), laquelle tension de sortie est appliquée à un circuit de courant de freinage (18), le circuit de courant de freinage (18) comprenant au moins un élément de commutation (FET) par le biais duquel les bornes de moteur (K1, K2) peuvent être mises en court-circuit,
**caractérisé en ce que**,
dans un fonctionnement d'urgence, la tension de sortie (UA) du moteur électrique (22) fonctionnant comme générateur est appliquée à un circuit de charge (12), lequel stocke de l'énergie électrique dans un condensateur (C) pour l'alimentation en énergie d'une électronique de commande d'urgence (10),
en outre une première unité d'évaluation et de commande (11) de l'électronique de commande d'urgence (10) réglant, par le biais de l'élément de commutation réalisé comme transistor à effet de champ (FET), une force de freinage effective pour l'amortissement du mouvement du battant (5) et la première unité d'évaluation et de commande (11) effectuant, par le biais du transistor à effet de champ (FET), une modulation d'impulsions en largeur du courant de moteur (I_{A}).

2. Entraînement selon la revendication 1,
**caractérisé en ce**
**qu'**un relais motorisé (34) active le fonctionnement d'urgence par le biais d'au moins un contact de relais (34.1) en cas de panne de courant et/ou en cas d'alarme.

3. Entraînement selon la revendication 2,
**caractérisé en ce que**
l'au moins un contact de relais (34.1), dans le fonctionnement normal, connecte les bornes de moteur (K1, K2) à une électronique de commande principale (30) et, dans le fonctionnement d'urgence, à l'électronique de commande d'urgence (10), laquelle comporte le circuit de charge (12).

4. Entraînement selon l'une des revendications 1 à 3,
**caractérisé en ce**
**qu'**une deuxième unité d'évaluation et de commande (32) de l'électronique de commande principale (30), dans le fonctionnement normal, communique avec la première unité d'évaluation et de commande (11) de l'électronique de commande d'urgence (10) par le biais de connexions de communication correspondantes, et délivre à la première unité d'évaluation et de commande (11) des informations relatives à l'état de fonctionnement actuel de l'entraînement électromécanique (1).

5. Entraînement selon l'une des revendications 1 à 4,
**caractérisé en ce que**
la première unité d'évaluation et de commande (11) règle l'amortissement du mouvement du battant (5) en fonction de l'état de fonctionnement actuel de l'entraînement électromécanique (1) et/ou d'une direction de mouvement actuelle et/ou d'une vitesse actuelle et/ou d'un angle d'ouverture actuel du battant (5) .

6. Entraînement selon la revendication 5,
**caractérisé en ce que**
la première unité d'évaluation et de commande (11) détermine une direction de mouvement et une vitesse actuelles du battant (5) à partir de la tension de sortie (UA) par le biais d'au moins un circuit de mesure (14A, 14B) .

7. Entraînement selon la revendication 6,
**caractérisé en ce**
**qu'**au moins un premier circuit de mesure (14A) détecte un mouvement d'ouverture du battant (5) et délivre à la première unité d'évaluation et de commande (11) une grandeur de mesure servant à la détermination de la vitesse d'ouverture du battant (5).

8. Entraînement selon la revendication 6 ou 7,
**caractérisé en ce**
**qu'**au moins un deuxième circuit de mesure (14B) détecte un mouvement de fermeture du battant (5) et délivre à la première unité d'évaluation et de commande (11) une grandeur de mesure servant à la détermination de la vitesse de fermeture du battant (5).

9. Entraînement selon l'une des revendications 5 à 8,
**caractérisé en ce**
**qu'**au moins un troisième circuit de mesure (16) comporte un capteur de position (Rp), lequel délivre à la première unité d'évaluation et de commande (11) une grandeur de mesure servant à la détermination d'un angle d'ouverture actuel et/ou d'une vitesse actuelle du battant (5).

10. Entraînement selon l'une des revendications 1 à 9,
**caractérisé en ce que**
la première unité d'évaluation et de commande (11) amortit avec une force de freinage maximale un mouvement d'ouverture automatique du battant (5) pendant une première durée prédéfinie et, au terme de la première durée prédéfinie, limite le mouvement d'ouverture supplémentaire du battant (5) à une vitesse d'ouverture maximale si le fonctionnement d'urgence se produit pendant le mouvement d'ouverture automatique du battant (5) .

11. Entraînement selon l'une des revendications 1 à 10,
**caractérisé en ce que**
la première unité d'évaluation et de commande (11) limite un mouvement d'ouverture manuel du battant (5) à une vitesse d'ouverture maximale si le fonctionnement d'urgence se produit pendant le mouvement d'ouverture manuel.

12. Entraînement selon l'une des revendications 1 à 11,
**caractérisé en ce que**
la première unité d'évaluation et de commande (11) limite le mouvement de fermeture du battant (5) à une vitesse de fermeture maximale si le fonctionnement d'urgence se produit pendant le mouvement de fermeture.

13. Entraînement selon la revendication 12,
**caractérisé en ce que**
la première unité d'évaluation et de commande (11) met fin à l'amortissement du mouvement de fermeture du battant (5) si le battant (5) a atteint au moins une condition de butée de fin de course prédéfinie.

14. Entraînement selon la revendication 13,
**caractérisé en ce**
**qu'**une vitesse de butée de fin de course et/ou une position de butée de fin de course sont prédéfinies comme condition de butée de fin de course.

15. Entraînement selon l'une des revendications 4 à 14,
**caractérisé en ce que**
la deuxième unité d'évaluation et de commande (32) délivre à la première unité d'évaluation et de commande (11) des paramètres et/ou des valeurs limites pour l'amortissement du mouvement du battant (5).

16. Entraînement selon la revendication 15,
**caractérisé en ce que**
la première unité d'évaluation et de commande (11) stocke dans une mémoire non volatile (19) les paramètres et/ou valeurs limites pour l'amortissement du mouvement du battant (5).

17. Entraînement selon la revendication 15 ou 16,
**caractérisé en ce que**
la première unité d'évaluation et de commande (11) incrémente, à chaque cycle d'ouverture du battant (5), un compteur dans la mémoire non volatile (19).

18. Porte dotée d'au moins un battant mobile (5) et d'un entraînement électromécanique (1) destiné à actionner le battant mobile (5),
**caractérisée en ce que**
l'entraînement électromécanique (1) est réalisé selon au moins l'une des revendications 1 à 17.
